# EUROPÄISCHE PATENTSCHRIFT

(11) **EP 1 787 787 B1**
(45) Veröffentlichungstag und Bekanntmachung des Hinweises auf die Patenterteilung: **22.04.2009**
(21) Anmeldenummer: 06023591.8
(22) Anmeldetag: 14.11.2006
(51) Int. Cl.: B29C 51/04, B29C 51/26, F16H 19/00, F16H 55/28

(54) **Antriebseinrichtung für einen Streckhelfer zum mechanischen Verformen einer Kunststofffolie oder Kunststoffplatte**
Driving means for a pre-stretch rod for shaping a plastic sheet or plate
Dispositif d'entraînement pour une tige d'étirage d'une machine de formage d'une feuille ou plaque

(30) Priorität: 19.11.2005 DE 102005055209
(43) Veröffentlichungstag der Anmeldung: 23.05.2007
(73) Patentinhaber: ILLIG Maschinenbau GmbH & Co. KG, 74081 Heilbronn (DE)
(72) Erfinder: Trefz, Thomas, 71546 Grossaspach (DE)

(56) Entgegenhaltungen:
- EP-A1- 1 300 234
- EP-A1- 1 344 628
- EP-A2- 1 046 489
- WO-A-01/84015
- WO-A-98/36192

## Beschreibung

Die Erfindung betrifft eine Antriebseinrichtung für einen Streckhelfer zum mechanischen Verformen einer Kunststofffolie oder -platte nach der Gattung des Hauptanspruches.

Aus der DE 33 46 628 C2 ist ein pneumatischer Antrieb für Streckhelfer bekannt, bei dem ein zentraler Zylinder mit geringer Trägheit die Vertikalbewegung der Streckhelfer übernimmt. Nachteilig ist hierbei die geringe maximale Bewegungsgeschwindigkeit und die Ungleichmäßigkeit der Bewegung, die zu Qualitätsmängeln bei der Verformung führt.

Durch Vorbenutzung des Anmelders sind mechanische Antriebe der Streckhelfer mit servogetriebenen Kugelrollspindeln bekannt. Diese Antriebe sind für die hohen Geschwindigkeiten, die ein Streckhelferantrieb erreichen sollte, nur bedingt geeignet, da die Drehzahl der Mutter, die die Spindel bewegt, limitiert ist.

Aus der DE 199 17 472 C1 ist eine Antriebseinrichtung für Streckhelfer bekannt, bei der zwei mit einer Trägerplatte der Streckhelfer verbundene Zahnstangen vorgesehen sind, in deren einseitiger Verzahnung je ein Zahnrad kämmt, wobei die beiden Zahnräder auch ineinander kämmen, und eines der Zahnräder mit einem Antrieb in Verbindung steht. Durch die Verwendung von 2 zueinander beabstandeten Zahnstangen ergeben sich bauartbedingt einige Nachteile wie ein großer Bauraum, eine hohe Massenträgheit und damit verbunden eine begrenzte maximale Bewegungsgeschwindigkeit. Aufgrund des einseitigen Lastangriffes der Zahnräder an den Stangen ergibt sich eine Durchbiegung der Stangen in horizontaler Richtung.

Um diese Durchbiegung zu minimieren, sind die Stangen in ihrer Dimensionierung auf diese Querlast abgestimmt. Die Horizontalkräfte bzw. Biegungen ergeben erhöhte Kräfte auf die Lager der Stangen, auf welche ebenfalls durch ausreichende Dimensionierung reagiert werden muss. Zur Drehzahlanpassung besteht der Bedarf eines externen raumverbrauchenden Getriebes. Zur nötigen Anpassung der Lage der Abtriebswelle ergibt sich der Bedarf eines externen raumverbrauchenden Winkelgetriebes.

Der Erfindung liegt die Aufgabe zugrunde, die Antriebseinrichtung für die Streckhelfer so auszubilden, dass sie einfach im Aufbau, kompakt und kostengünstig ist. Zur Erzielung hoher Bewegungsgeschwindigkeiten > 1 m/s sollte die Einrichtung eine geringe Massenträgheit aufweisen. Es sollte ein günstiger Kraftverlauf ohne verschleißanfällige Bauteile gegeben sein. Die Antriebseinrichtung sollte in Weiterbildung so ausgebildet sein, dass der Antrieb kein separates und damit raumverbrauchendes Getriebe benötigt und der Antrieb zur Vermeidung von Schwingungen vertikal angeordnet ist. In einer weiteren Ausbildung der Erfindung sollte die Integration einer Sperreinrichtung gegeben sein, die den Antrieb in der Arbeitsposition blockiert, wobei vorhandene Übertragungselemente entlastet werden sollten.

Zur Lösung der Aufgabe werden die Merkmale des Hauptanspruches vorgeschlagen. Weiterbildungen sind in den Unteransprüchen beschrieben. Ein Ausführungsbeispiel der Erfindung ist nachfolgend anhand der schematischen Zeichnungen näher beschrieben. Es zeigt:

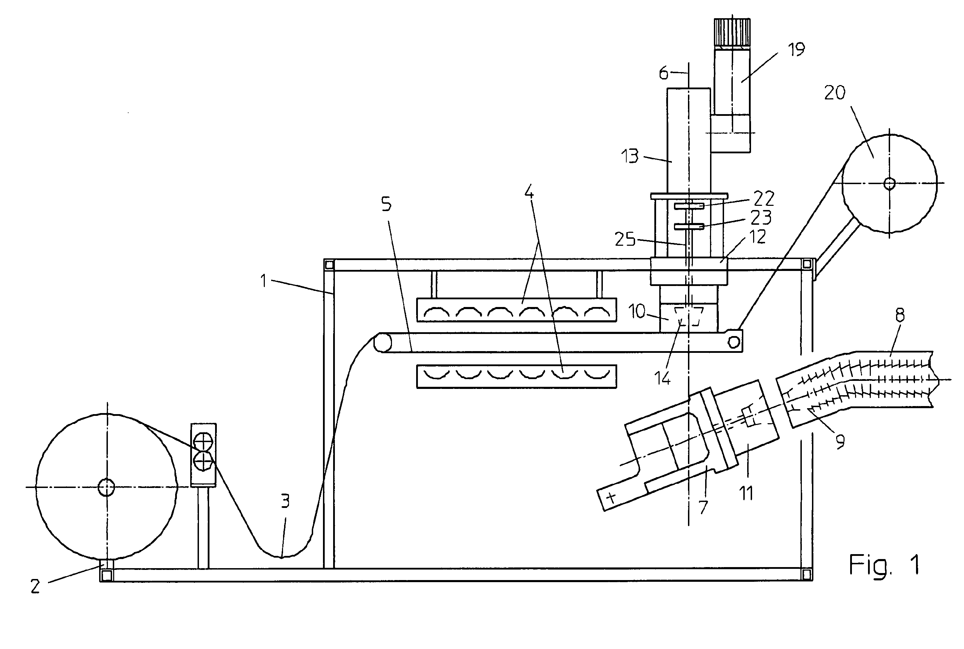

Fig. 1 eine von der Rolle arbeitende Thermoformmaschine mit einer Antriebseinrichtung für Streckhelfer
Fig. 2 einen Querschnitt durch die Antriebseinrichtung
Fig. 3 einen Schnitt durch die Antriebseinrichtung entlang der Linie A - A in Fig. 2
Fig. 4 einen Schnitt durch die Antriebseinrichtung entlang der Linie B - B in Fig. 5
Fig. 5 einen Querschnitt durch die Antriebseinrichtung gemäß einer Weiterbildung

Die erfindungsgemäße Antriebseinrichtung wird eingesetzt bei einem Rollenautomaten oder bei einer Plattenformmaschine und ist beispielhaft anhand des Einbaues in einen Rollenautomaten mit kombiniert formendem und stanzendem Werkzeug beschrieben. In einem Gestell 1 sind die wesentlichen Teile des Rollenautomaten untergebracht, eine Rollenaufnahme 2 steht eingangsseitig und entfällt, wenn die zu verformende Folienbahn 3 direkt von einem Extruder zugeführt wird. Auch die Heizeinrichtung 4 ist bei Extruderverkettung eventuell nicht erforderlich. Eine intermittierend betriebene Transporteinrichtung 5 führt die Folienbahn 3 zu einer Form/Stanzstation 6, in der mittels Druckluft und/oder Vakuum Behälter 9 geformt und aus der Folienbahn 3 ausgetrennt werden. Nach dem Absenken und ggf. Schwenken des Formtisches 7, der das Unterteil 11 des Formwerkzeuges trägt, werden die Behälter 9 in Stapelrinnen 8 ausgestoßen. Die Folienbahn 3 wird anschließend von der Folienaufwickeleinrichtung 20 aufgenommen.

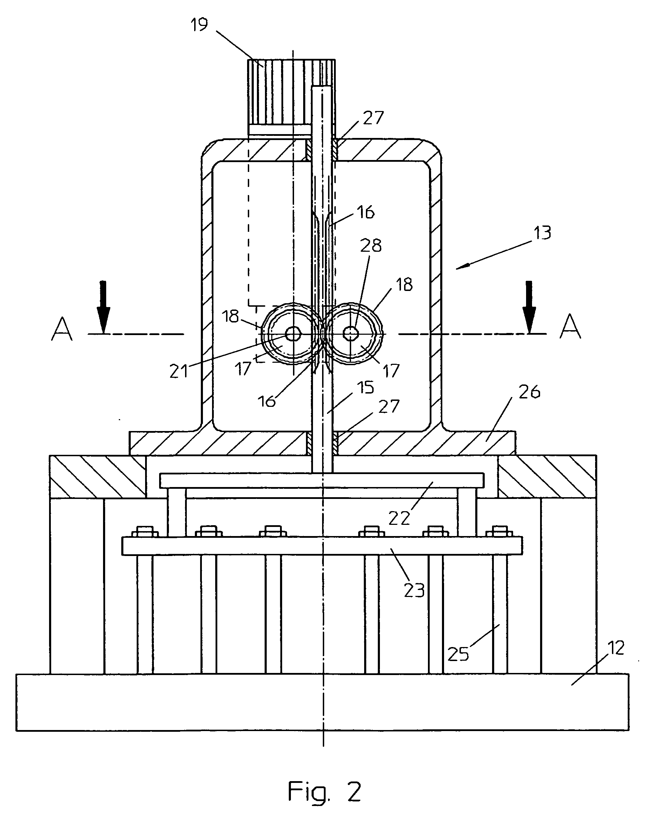

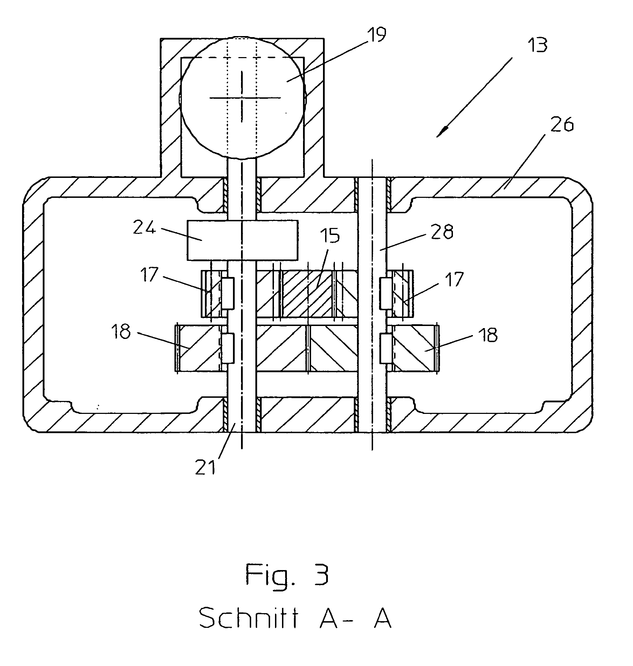

Das Oberteil 10 des Formwerkzeuges sitzt an einem Obertisch 12, an dem auch die Antriebseinrichtung 13 für mechanisch wirkende Streckhelfer 14 angeordnet ist und die näher in den Figuren 2 bis 5 dargestellt ist.

Die Antriebseinrichtung 13 umfasst eine Stange 15 mit an zwei gegenüberliegenden Seiten angeordneten Verzahnungen 16, wobei in den Verzahnungen 16 je ein Zahnrad 17 kämmt. Die Zahnräder 17 sind je auf einer Welle 21, 28 angeordnet, die auch Zahnräder 18 tragen, die ineinander kämmen und die Wellen 21, 28 und somit auch die Zahnräder 17 synchronisieren. Eine der Wellen 21, 28, im dargestellten Fall die Welle 21, steht direkt oder indirekt über zwischengeschaltete Zahnräder 29 mit dem vorzugsweise vertikal angeordneten Antrieb 19 in Wirkverbindung. Die Stange 15 sitzt im Gehäuse 26 mit Führungen 27 zu deren Längsführung. Die Wellen 21, 28 sind im Gehäuse 26 gelagert. Die Stange 15 ist mit dem Steg 22 und dieser mit der Trägerplatte 23 für die an Stangen 25 befestigten Streckhelfer 14 verbunden.

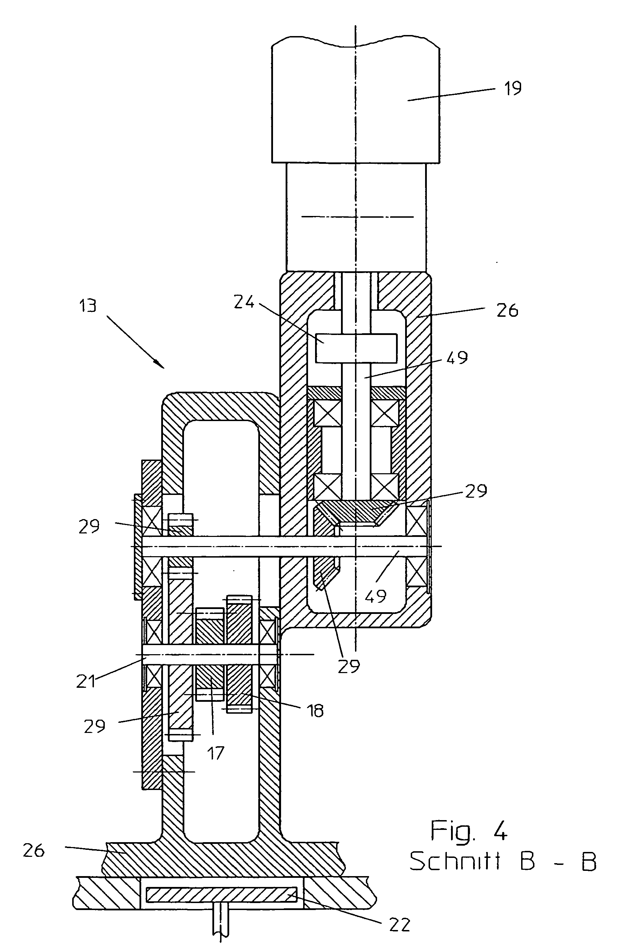

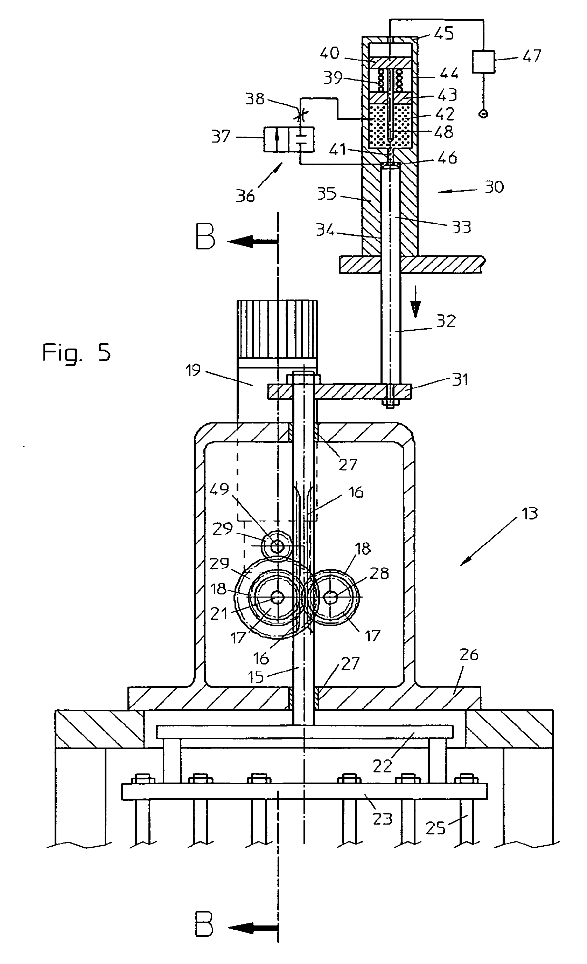

In Weiterbildung der Erfindung wird vorgeschlagen, wie in Fig. 4 und 5 gezeigt, zwischengeschaltete Zahnräder 29 und zugehörige Wellen 49 vorzusehen. Damit kann zum einen auf ein externes, am Antrieb angeordnetes, raumverbrauchendes Getriebe zur Anpassung der Drehzahl verzichtet werden. Zum anderen erübrigt sich so ein extemes, am Antrieb angeordnetes, raumverbrauchendes Winkelgetriebe, das ansonsten vonnöten wäre zur Anpassung der Ausrichtung der Ausgangswelle an den vertikal angeordneten Antrieb 19.

In einer weiteren Ausbildung wird vorgeschlagen, zur Vermeidung von Überlastungen den Antrieb 19 über eine Überlastkupplung 24 mit einer der Wellen (21, 28) zu kuppeln.

In einer nächsten Ausbildung wird vorgeschlagen, der Antriebseinrichtung 13, wie in Fig. 5 gezeigt, eine Sperreinrichtung 30 zuzuordnen, um die Stange 15 in der Stellung, in der die Druckluft zur Formung der Behälter 9 eine vertikal nach oben gerichtete Kraft auf die Streckhelfer 14 ausübt, zu blockieren unter Entlastung der Zahnräder 17, 18. An der am oberen Ende der Stange 15 befestigten Halteplatte 31 ist die Stange 32 befestigt, deren Stangenende 33 sich bis in ein ortsfestes Gehäuse 35 mit einer Bohrung 34 erstreckt, in der es dichtend geführt ist. Der durch die Bohrung 34 gebildete Raum 46 ist mit einer Flüssigkeit - Öl, Wasser oder eine Emulsion - gefüllt und steht über eine Verbindungsbohrung 41 mit einem Vorratsraum 42 in Verbindung. Dieser Vorratsraum 42 wird durch eine Bohrung 44 gebildet, die im Durchmesser größer ist als die Bohrung 34. Sie wird von einem Deckel 45 verschlossen. In ihr ist ein verschiebbarer Kolben 43 angeordnet, an dem mittig ein Bolzen 48 sitzt und dessen Querschnitt - zumindest am gegenüberliegenden Ende - dem Querschnitt der Bohrung 41 zwischen Raum 46 und Vorratsraum 42 entspricht. Ferner ist in Weiterbildung der Erfindung ein Kolben 43 zwischen Kolben 40 und Verbindungsbohrung 41 verschiebbar angeordnet und über eine Feder 39 auf Abstand zum Kolben 43 gehalten und sorgt dadurch für einen zusätzlichen Druck auf die Flüssigkeit, wenn sich die Stangen 15 nach unten bewegen. Die Verschiebung des Kolbens 40 erfolgt durch Druckluftzufuhr über das Ventil 47 auf die Oberseite des Kolbens 40.

Eine Weiterbildung dieser Sperreinrichtung 30 besteht in der Anordnung eines Bypassventils 36. Dabei handelt es sich um eine Verbindungsleitung zwischen dem Raum 46 und dem zugehörigen Vorratsraum 42, die über ein Ventil 37 geöffnet oder geschlossen wird. Vorzugsweise ist eine einstellbare Drossel 38 eingebaut. Die Funktion des Bypassventils 36 besteht darin, vor der Aufwärtsbewegung der Stangen 15 den hohen Druck in der Flüssigkeit schnell abzubauen. Man kann auf diese Weise bei noch anstehendem Formdruck aus dem Formprozess die Stangen 15 bereits aufwärts fahren. Ein solches Bypassventil 36 bewirkt eine Querschnittsvergrößerung des in der Praxis relativ kleinen Querschnittes der Verbindungsbohrung 41.

Folge ist eine rascher ablaufende Aufwärtsbewegung der Stangen 15.

**Bezugszeichenliste**

| | | | |
|---|---|---|---|
| 1 | Gestell | 26 | Gehäuse |
| 2 | Rollenaufnahme | 27 | Führung |
| 3 | Folienbahn | 28 | Welle |
| 4 | Heizeinrichtung | 29 | Zahnrad |
| 5 | Transporteinrichtung | 30 | Sperreinrichtung |
| 6 | Form/Stanzstation | 31 | Halteplatte |
| 7 | Formtisch | 32 | Stange |
| 8 | Stapelrinne | 33 | Stangenende |
| 9 | Behälter | 34 | Bohrung |
| 10 | Oberteil | 35 | Gehäuse |
| 11 | Unterteil | 36 | Bypassventil |
| 12 | Obertisch | 37 | Ventil |
| 13 | Antriebseinrichtung | 38 | Drossel |
| 14 | Streckhelfer | 39 | Feder |
| 15 | Stange | 40 | Kolben |
| 16 | Verzahnung | 41 | Verbindungsbohrung |
| 17 | Zahnrad | 42 | Vorratsraum |
| 18 | Zahnrad | 43 | Kolben |
| 19 | Antrieb | 44 | Bohrung |
| 20 | Folienaufwickeleinrichtung | 45 | Deckel |
| 21 | Welle | 46 | Raum |
| 22 | Steg | 47 | Ventil |
| 23 | Trägerplatte | 48 | Bolzen |
| 24 | Überlastsicherung | 49 | Welle |
| 25 | Stange | | |

## Patentansprüche

1. Antriebseinrichtung für einen Streckhelfer zum mechanischen Verformen einer Kunststofffolie oder -platte vor oder während ihres Verformens zu einem Behälter mittels Druckluft und/oder Vakuum, wobei der Streckhelfer einer Trägerplatte zugeordnet ist, die mit einer verzahnten Stange verbunden ist, **dadurch gekennzeichnet, dass** die Stange (15) an zwei gegenüberliegenden Seiten eine Verzahnung (16) aufweist, in der je ein auf einer Welle (21, 28) angeordnetes, synchronisiertes Zahnrad (17) kämmt, und dass eine der Wellen (21, 28) mit einem Antrieb (19) in Wirkverbindung steht.

2. Antriebseinrichtung nach Anspruch 1, **dadurch gekennzeichnet, dass** die Synchronisation der Zahnräder (17) durch Zahnräder (18) erfolgt, die auf den Wellen (21, 28) angeordnet sind.

3. Antriebseinrichtung nach Anspruch 1 oder 2, **dadurch gekennzeichnet, dass** der Antrieb (19) direkt mit einer der Wellen (21, 28) verbunden ist.

4. Antriebseinrichtung nach Anspruch 1 oder 2, **dadurch gekennzeichnet, dass** der Antrieb (19) durch zwischengeschaltete, auf Wellen (49) angeordnete Zahnräder (29) mit einer der Wellen (21, 28) verbunden ist.

5. Antriebseinrichtung nach Anspruch 4, **dadurch gekennzeichnet, dass** Zahnräder (29) auf Wellen (49) so zwischen Wellen (21, 28) und Antrieb (19) angeordnet sind, dass die Welle des Antriebs (19) vertikal anordenbar ist.

6. Antriebseinrichtung nach Anspruch 4, **dadurch gekennzeichnet, dass** Zahnräder (29) auf Wellen (49) so zwischen Wellen (21, 28) und Antrieb (19) angeordnet sind, dass eine Übersetzung zwischen den Wellen (21, 28) und der Welle des Antriebs (19) erreicht wird.

7. Antriebseinrichtung nach einem der Ansprüche 1 bis 6 , **dadurch gekennzeichnet, dass** der Antrieb (19) über eine Überlastsicherung (24) mit einer der Wellen (21, 28, 49) gekuppelt ist.

8. Antriebseinrichtung nach einem der Ansprüche 1 bis 7, **dadurch gekennzeichnet, dass** als Antrieb (19) ein Servomotor eingesetzt ist.

9. Antriebseinrichtung nach einem der Ansprüche 1 bis 8, **dadurch gekennzeichnet, dass** die Stange (15) mit einer Sperreinrichtung (30) in Wirkverbindung steht.

10. Antriebseinrichtung nach Anspruch 9, **dadurch gekennzeichnet, dass** die Sperreinrichtung (30) eine an der Stange (15) befestigte Stange (32) umfasst, deren Stangenende (33) in einem mit einer Flüssigkeit gefüllten Raum (46) axial verschiebbar angeordnet ist, der über eine Verbindungsbohrung (41) mit einem Vorratsraum (42) für die Flüssigkeit verbunden ist sowie eine Absperreinrichtung zum Sperren bzw. Freigeben der Verbindungsbohrung (41) zwischen Raum (46) und Vorratsraum (42).

11. Antriebseinrichtung nach Anspruch 10, **dadurch gekennzeichnet, dass** zwischen dem Raum (46) und dem Vorratsraum (42) ein Bypassventil (36) vorgesehen ist.

12. Antriebseinrichtung nach Anspruch 11, **dadurch gekennzeichnet, dass** im Bypassventil (36) eine einstellbare Drossel (38) integriert ist.

## Claims

1. Driving equipment for a pre-stretch rod for mechanical shaping of a plastic sheet or plate before or during its shaping to a container by means of compressed air and/or a vacuum, wherein the pre-stretch rod is assigned to a supporting plate which is connected with a toothed rod, **characterized in that** the rod (15) has a set of teeth (16) on two opposite sides, in each of which sets of teeth a synchronized gear wheel (17) arranged on a shaft (21, 28) engages, and **in that** one of the shafts (21, 28) is in effective connection with a drive (19).

2. Driving equipment according to Claim 1, **characterized in that** the synchronization of the gear wheels (17) takes place by means of gear wheels (18) which are arranged on the shafts (21, 28).

3. Driving equipment according to Claim 1 or 2, **characterized in that** the drive (19) is connected directly to one of the shafts (21, 28).

4. Driving equipment according to Claim 1 or 2, **characterized in that** the drive (19) is connected to one of the shafts (21, 28) by means of interposed gear wheels (29) arranged on shafts (49).

5. Driving equipment according to Claim 4, **characterized in that** gear wheels (29) are arranged on shafts (49) between shafts (21, 28) and drive (19) in such a manner that the shaft of the drive (19) can be arranged vertically.

6. Driving equipment according to Claim 4, **characterized in that** gear wheels (29) are arranged on shafts (49) between shafts (21, 28) and drive (19) in such a manner that a gear ratio is established between the shafts (21, 28) and the shaft of the drive (19).

7. Driving equipment according to one of Claims 1 to 6 , **characterized in that** the drive (19) is coupled with one of the shafts (21, 28, 49) via an overload protection device (24).

8. Driving equipment according to one of Claims 1 to 7, **characterized in that** a servomotor is used as the drive (19).

9. Driving equipment according to one of Claims 1 to 8, **characterized in that** the rod (15) is in effective connection with a locking apparatus (30).

10. Driving equipment according to Claim 9, **characterized in that** the locking apparatus (30) comprises a rod (32) fixed to the rod (15), the rod end (33) of which is arranged axially displaceably in a space (46) filled with a liquid, which space is connected to a supply space (42) for the liquid via a connecting hole (41), as well as a blocking apparatus for blocking and unblocking the connecting hole (41) between the space (46) and supply space (42).

11. Driving equipment according to Claim 10, **characterized in that** a bypass valve (36) is provided between the space (46) and the supply space (42).

12. Driving equipment according to Claim 11, **characterized in that** an adjustable butterfly valve (38) is integrated into the bypass valve (36).

## Revendications

1. Dispositif d'entraînement destiné à un dispositif auxiliaire d'étirage pour la déformation mécanique d'un film ou d'une plaque plastique avant ou pendant sa déformation en un récipient au moyen d'air comprimé et/ou de vide, le dispositif auxiliaire d'étirage étant associé à une plaque support qui est reliée à une barre crantée, **caractérisé en ce que** la barre (15) présente sur deux côtés opposés une denture (16) dans laquelle s'engrène une roue dentée (17) synchronisée et disposée sur un arbre (21, 28), et **en ce que** l'un des arbres (21, 28) est en liaison active avec un entraînement (19).

2. Dispositif d'entraînement selon la revendication 1, **caractérisé en ce que** la synchronisation des roues dentées (17) s'effectue par des roues dentées (18) qui sont disposées sur les arbres (21, 28).

3. Dispositif d'entraînement selon la revendication 1 ou 2, **caractérisé en ce que** l'entraînement (19) est relié directement à l'un des arbres (21, 28).

4. Dispositif d'entraînement selon la revendication 1 ou 2, **caractérisé en ce que** l'entraînement (19) est relié à l'un des arbres (21, 28) par des roues dentées (29) intercalées et disposées sur des arbres (49).

5. Dispositif d'entraînement selon la revendication 4, **caractérisé en ce que** des roues dentées (29) sont disposées sur des arbres (49) entre les arbres (21, 28) et l'entraînement (19) de telle sorte que l'arbre de l'entraînement (19) peut être placé verticalement.

6. Dispositif d'entraînement selon la revendication 4, **caractérisé en ce que** des roues dentées (29) sont disposées sur des arbres (49) entre les arbres (21, 28) et l'entraînement (19) de telle sorte qu'une transmission est obtenue entre les arbres (21, 28) et l'arbre de l'entraînement (19).

7. Dispositif d'entraînement selon l'une quelconque des revendications 1 à 6, **caractérisé en ce que** l'entraînement (19) est couplé par une sécurité de surcharge (24) à l'un des arbres (21, 28, 49).

8. Dispositif d'entraînement selon l'une quelconque des revendications 1 à 7, **caractérisé en ce qu'**un servomoteur est utilisé comme entraînement (19).

9. Dispositif d'entraînement selon l'une quelconque des revendications 1 à 8, **caractérisé en ce que** la barre (15) est en liaison active avec un dispositif de blocage (30).

10. Dispositif d'entraînement selon la revendication 9, **caractérisé en ce que** le dispositif de blocage (30) comprend une barre (32) qui est fixée sur la barre (15) et dont l'extrémité (33) est disposée de façon coulissante axialement dans un espace (46) rempli d'un liquide, lequel est relié par un perçage de liaison (41) à un espace de réserve (42) pour le liquide et un dispositif de fermeture pour le blocage ou la libération du perçage de liaison (41) entre l'espace (46) et l'espace de réserve (42).

11. Dispositif d'entraînement selon la revendication 10, **caractérisé en ce qu'**une soupape de dérivation (36) est prévue entre l'espace (46) et l'espace de réserve (42).

12. Dispositif d'entraînement selon la revendication 11, **caractérisé en ce qu'**un clapet d'étranglement (38) réglable est intégré dans la soupape de dérivation (36).
